# FASCICULE DE BREVET EUROPEEN

(11) **EP 1 155 801 B1**
(45) Date de publication et mention de la délivrance du brevet: **24.08.2005**
(21) Numéro de dépôt: 01111030.1
(22) Date de dépôt: 08.05.2001
(51) Int. Cl.: B29C 44/10, B29C 44/02, B60C 17/06

(54) **Procédé et dispoitif de réticulation/expansion d'une ébauche d'appui de sécurité pour pneumatique et appui obtenu par ce procédé**
Verfahren und Vorrichtung zur Vernetzung und Schäumen von Notlaufstützkörper für Fahrzeugreifen und damit hergestellte Körper
Method and device for crosslinking and foaming of safety support body for inflatable tyres and support body so produced

(30) Priorité: 19.05.2000 FR 0006488
(43) Date de publication de la demande: 21.11.2001
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: Durif, Pierre, 63530 Enval (FR); Morel, Noel, 63530 Enval (FR); Peyron, Georges, 63200 Riom (FR); Menard, Gilbert, 63530 Volvic (FR)
(74) Mandataire: Hiebel, Robert

(56) Documents cités:
- EP-A- 0 594 072
- DE-A- 19 640 039
- GB-A- 1 189 505

## Description

La présente invention concerne un procédé d'expansion d'au moins une ébauche réticulable ou réticulée qui est destinée à constituer à l'état réticulé et expansé tout ou partie d'un appui de sécurité élastomère de structure cellulaire à cellules fermées, ledit appui étant destiné à être monté sur une jante de roue à l'intérieur d'une enveloppe de pneumatique. L'invention concerne également un procédé de réticulation et d'expansion de ladite ou de chaque ébauche, un dispositif pour la mise en oeuvre dudit procédé d'expansion ou de réticulation/ expansion, et enfin un tronçon d'appui réticulé et expansé et un tel appui qui sont obtenus par ce procédé.

Les appuis de sécurité selon l'invention sont utilisables pour équiper des pneumatiques d'engins ou de véhicules de type deux roues, automobiles ou poids-lourds, par exemple.

L'utilisation d'appuis de sécurité élastomères à cellules fermées est bien connue, pour des pneumatiques de compétition destinés à évoluer sur des parcours accidentés de type « rallye-raid ».

Ces appuis cellulaires, usuellement de forme sensiblement torique, sont censés permettre le roulage suite à une chute de pression significative sur une distance dépendant notamment des conditions plus ou moins sévères caractérisant ce roulage, suite à une perforation de l'enveloppe de pneumatique, par exemple.

De tels appuis sont généralement obtenus par extrusion d'une composition de caoutchouc réticulable et expansible ayant été soumise à un travail thermo-mécanique pour l'obtention d'une ébauche, puis par réticulation et expansion de l'ébauche, l'expansion ayant pour origine la décomposition thermique d'un agent de gonflement initialement présent dans la composition de caoutchouc.

Plus précisément, dans une première étape de travail thermo-mécanique, on procède à un malaxage de la composition de caoutchouc, laquelle comprend notamment un élastomère diénique tel que du caoutchouc butyl (copolymère d'isoprène et d'isobutylène), une charge renforçante telle que du noir de carbone, un agent de gonflement pour permettre l'obtention ultérieure de la structure cellulaire expansée et un système de réticulation.

Dans une seconde étape de façonnage, on procède à une extrusion de la composition de caoutchouc obtenue au terme de la première étape pour l'obtention d'une ébauche d'appui réticulable et expansible de forme prédéterminée.

Dans une troisième étape réalisée en étuve, on procède à un préchauffage de l'ébauche ainsi obtenue, à une température usuellement comprise entre 70° C et 100 ° C.

Dans une quatrième étape réalisée dans un moule, on procède à une réticulation au moins partielle de l'ébauche préchauffée, à une température usuellement comprise entre 130° C et 150° C.

Dans une cinquième étape réalisée en étuve, on soumet l'ébauche démoulée à une expansion, à la pression atmosphérique et à une température usuellement comprise entre 130° C et 150° C.

On obtient ainsi un appui réticulé et expansé.

Le document de brevet français FR-A-2 095 535 décrit un procédé pour faire mousser et durcir une matière élastomère de remplissage, telle que du polyisoprène, du diméthyl-méthylvinyl polysiloxane ou du polybutadiène, à l'intérieur d'un ensemble monté constitué par une enveloppe de pneumatique préalablement vulcanisée qui est montée sur une jante de roue. Cette matière de remplissage est destinée à équiper des pneumatiques destinés à des véhicules de type poids-lourds, et le but principal recherché est de minimiser l'oxydation superficielle dans le corps de l'enveloppe vulcanisée.

Ce but est atteint dans ce document par la mise en oeuvre d'un procédé consistant à chauffer à l'intérieur d'un four l'ensemble monté au moyen de vapeur d'eau saturée à une température d'environ 149° C puis, soit à retirer l'ensemble monté du four soit à réaliser dans celui-ci plusieurs cycles de chauffage suivi d'une suppression de la vapeur d'eau à l'intérieur du four, pour permettre le gonflement de la matière de remplissage.

On notera que cet ensemble monté est destiné à former une enceinte de type moule pour la matière de remplissage qu'il contient, du fait que la mousse en cours de gonflement appuie sur la paroi de cet ensemble monté.

On notera également que la mousse qui appuie sur la paroi de l'ensemble monté est le siège de réactions chimiques locales à l'emplacement de cette paroi (jante ou enveloppe), ce qui induit une hétérogénéité de structure pour la mousse finalement formée.

Les procédés de réticulation/ expansion traditionnels qui utilisent un moule pour la réticulation présentent un inconvénient majeur, qui est lié aux caractéristiques de densité des appuis réticulés et expansés obtenus. En effet, les appuis réticulés et expansés qui sont obtenus par ces procédés avec moule sont généralement caractérisés par une couche intermédiaire présentant une densité nettement supérieure (usuellement selon un rapport de 1,5) à celle du coeur ou centre de l'appui. On a représenté schématiquement à la Fig. 5 annexée à la présente description une vue en section transversale d'un tel appui présentant, radialement vers l'intérieur de sa surface externe (à l'emplacement de laquelle se trouve une couche superficielle ou peau A de l'appui), cette couche intermédiaire B et ledit coeur C.

Or, l'expérience montre que ce gradient de densité est à l'origine d'une propagation accrue vers le coeur de l'appui des déformations qui sont imposées à ce dernier en roulage à pression nulle, ce qui conduit à un échauffement interne également accru de l'appui, pouvant provoquer sa destruction dans un délai de roulage relativement bref.

Le but de la présente invention est de proposer un procédé d'expansion d'au moins une ébauche partiellement réticulée qui est destinée à constituer à l'état réticulé et expansé tout ou partie d'un appui de sécurité élastomère de structure cellulaire à cellules fermées, ledit ou chaque appui étant destiné à être monté sur une jante de roue à l'intérieur d'une enveloppe de pneumatique, qui permette de remédier à l'inconvénient précité en relation avec l'utilisation d'un moule pour la réticulation.

A cet effet, un procédé d'expansion selon l'invention est tel qu'il consiste à cuire ladite ou chaque ébauche dans un bain de fluide en surpression contenu à l'intérieur d'une enceinte, la température dudit bain comprenant une valeur maximale comprise entre 110° C et 210° C, et la pression absolue dudit bain comprenant au moins une valeur égale ou supérieure à 5 bars et une valeur finale de détente sensiblement égale à 1 bar, pour l'expansion de ladite ou de chaque ébauche de telle manière que l'augmentation de volume de celle-ci soit illimitée vis-à-vis de ladite enceinte.

Selon un exemple de réalisation de l'invention, ce procédé d'expansion consiste à faire varier d'une manière discrète ou continue ladite pression absolue dudit fluide entre une valeur maximale inférieure ou égale à 26 bars et une valeur inférieure à ladite valeur maximale.

Selon l'invention, ce procédé d'expansion consiste à utiliser un fluide liquide, tel que de l'eau, ou gazeux, tel que de l'air chaud, de la vapeur d'eau ou de l'azote, pour cuire ladite ou chaque ébauche.

Selon une caractéristique optionnelle de l'invention, ce procédé d'expansion consiste à refroidir ledit bain à une température inférieure ou égale à 100° C et à une pression absolue comprise entre 1 bar et 26 bars, suite à la cuisson de ladite ou de chaque ébauche.

Selon une autre caractéristique de l'invention, ce procédé d'expansion consiste à cuire dans ledit bain plusieurs ébauches de formes linéaires et/ou incurvées.

On notera que les appuis ou parties d'appuis ainsi obtenus peuvent présenter des formes et des dimensions variables en fonction des applications recherchées.

La présente invention a également pour objet un procédé de réticulation et d'expansion d'au moins une ébauche réticulable et expansible qui est destinée à constituer à l'état réticulé et expansé tout ou partie d'un appui de sécurité élastomère de structure cellulaire à cellules fermées, ledit appui étant destiné à être monté sur une jante de roue à l'intérieur d'une enveloppe de pneumatique.

Ce procédé de réticulation et d'expansion selon l'invention permet également de pallier l'inconvénient précité en relation avec les appuis réticulés et expansés, inconvénient provenant de l'utilisation d'un moule pour la réticulation, et il est tel que:
- ladite réticulation consiste à cuire ladite ou chaque ébauche expansible ou expansée dans un bain de fluide en surpression contenu à l'intérieur d'une enceinte, de telle manière que ladite ou chaque ébauche interagisse avec ledit bain indépendamment de ladite enceinte, la température dudit bain comprenant une valeur maximale comprise entre 110° C et 210° C et la pression absolue dudit bain comprenant au moins une valeur égale ou supérieure à 14 bars, et en ce que
- ladite expansion consiste à soumettre ladite ou chaque ébauche réticulable ou réticulée à un procédé d'expansion selon l'invention tel que défini ci-dessus.

On notera que l'on entend dans la présente description par ébauche réticulable une ébauche pouvant être encore réticulée, indépendamment de traitements thermiques antérieurs ayant pu provoquer un début de réticulation. Par conséquent, est par exemple considérée comme réticulable une ébauche ayant été soumise au préalable à un traitement thermique impliquant une réticulation superficielle. Ce traitement thermique peut avoir consisté en un préchauffage en étuve d'une ébauche extrudée et/ ou en l'opération même de façonnage d'une ébauche, dans le cas où il s'agit d'un moulage par injection ou par transfert, par exemple.

On notera également que ce procédé de réticulation et d'expansion selon l'invention permet de s'affranchir de la géométrie torique de l'ébauche qui est traditionnellement imposée par l'utilisation d'un moule, et qu'il permet également d'obtenir des appuis ou parties d'appuis réticulés et expansés présentant des géométries complexes qui seraient difficilement démoulables dans des conditions satisfaisantes, tels que des rainures et/ou des lobes et/ou des évidements dans l'une quelconque des directions de l'appui ou de la partie d'appui, par exemple.

On notera également que cette opération de réticulation/ expansion sans moule pour la réticulation permet d'obtenir des appuis ou parties d'appuis ne présentant pas de plan de joint, ce qui ne fragilise pas l'appui ou la partie d'appui correspondants.

Selon un mode de réalisation de l'invention, ce procédé de réticulation et d'expansion peut consister:
- dans une première étape, à soumettre ladite ou chaque ébauche réticulable et expansible à ladite réticulation pour l'obtention d'une ébauche pratiquement réticulée et expansible, puis
- dans une seconde étape, à soumettre ladite ou chaque ébauche pratiquement réticulée et expansible obtenue suite à ladite première étape à ladite expansion, pour l'obtention de tout ou partie dudit appui de sécurité réticulé et expansé correspondant.

Selon un autre mode de réalisation de l'invention, ce procédé de réticulation et d'expansion peut consister:
- dans une première étape, à soumettre ladite ou chaque ébauche réticulable et expansible à ladite expansion pour l'obtention d'une ébauche réticulable et pratiquement expansée, puis
- dans une seconde étape, à soumettre ladite ou chaque ébauche réticulable et pratiquement expansée à ladite réticulation pour l'obtention de tout ou partie dudit appui de sécurité réticulé et expansé correspondant.

Avantageusement, le procédé de réticulation et d'expansion selon l'invention consiste à utiliser une ou plusieurs ébauches qui sont chacune à base d'un copolymère d'isoprène et d'isobutylène (caoutchouc butyle ou IIR).

Cet élastomère présente notamment une perméabilité réduite à l'air.

Selon d'autres exemples de réalisation, on pourrait également utiliser pour la ou les ébauches les versions halogénées de ce copolymère, en particulier halogénée ou bromée (caoutchoucs BIIR ou CIIR, respectivement caoutchoucs bromobutyl et chlorobutyl), des copolymères de diènes et d'alpha-oléfines, par exemple des terpolymères d'éthylène, de propylène et d'un diène (EPDM), le polychloroprène (CR), encore un coupage de caoutchouc naturel (NR) et de polybutadiène (BR) selon des proportions sensiblement identiques.

Selon un exemple de réalisation de l'invention, un dispositif de cuisson selon l'invention pour la mise en oeuvre dudit procédé de réticulation et d'expansion, du type comprenant une enceinte qui est pourvue d'au moins une ouverture pour l'introduction et l'extraction de ladite ou chaque ébauche, de moyens de réception de ladite ou de chaque ébauche, de moyens de remplissage de ladite enceinte en fluide liquide ou gazeux, et de moyens de chauffage et de mise sous pression du fluide contenu à l'intérieur de ladite enceinte,
est tel que ladite enceinte comporte:
- un compartiment d'introduction pourvu à son entrée d'une ouverture pour l'introduction dans ledit compartiment d'une unité d'ébauches réticulables et expansibles en vue de sa cuisson, ladite ouverture d'introduction étant pourvue d'un moyen pour son obturation,
- un compartiment de cuisson prévu en aval dudit compartiment d'introduction et pourvu à son entrée d'une première cloison mobile pour sa mise en communication avec ledit compartiment d'introduction, ledit compartiment de cuisson étant destiné à contenir ledit fluide chauffé et sous pression pour l'obtention d'une unité d'ébauches réticulées et expansibles, et
- un compartiment d'extraction prévu en aval dudit compartiment de cuisson, pourvu à son entrée d'une seconde cloison mobile pour sa mise en communication avec ledit compartiment de cuisson et à sa sortie d'une ouverture à la pression atmosphérique pour l'obtention d'une unité d'ébauches réticulées et expansées et leur extraction de ladite enceinte, ladite ouverture d'extraction étant pourvue d'un moyen pour son obturation,
- des moyens pour transférer en alternance ledit fluide en surpression dudit compartiment d'extraction vers ledit compartiment d'introduction, et dudit compartiment d'introduction vers ledit compartiment d'extraction.

On notera que ces compartiments permettent de réticuler et d'expanser des unités d'ébauches en régime continu, en incluant un déplacement automatisé de chaque unité à l'intérieur d'un même compartiment et/ ou d'un compartiment à un autre, grâce aux ouvertures et cloisons mobiles précitées.

En effet, ces cloisons et ouvertures permettent, lorsqu'elles sont en position fermée, de former des sas à l'emplacement des compartiments d'introduction et d'extraction et, lorsque lesdites ouvertures sont en position fermée et lesdites cloisons en position ouverte, à l'un ou l'autre desdits compartiments d'introduction et d'extraction (qui est alors rempli de fluide) de former en alternance un équilibre de pression avec le compartiment contigu de cuisson qui quant à lui est rempli de fluide en continu.

On notera également que l'expansion volumique totale des ébauches est obtenue dans ledit compartiment d'extraction lorsque la pression absolue dans ce compartiment est à nouveau rendue égale à la pression atmosphérique (par l'intermédiaire de ladite ouverture d'extraction qui est alors en position ouverte, formant ainsi un équilibre de pression avec l'air ambiant).

On notera par ailleurs que ce dispositif de réticulation/ expansion selon l'invention peut être avantageusement intégré à un procédé global de fabrication d'appuis ou de tronçons d'appuis mis en oeuvre en régime continu, c'est-à-dire directement en aval des postes de façonnage, par exemple par extrusion ou par injection, et de préchauffage des ébauches façonnées en étuve.

Bien entendu, un dispositif de cuisson selon l'invention peut comporter tous moyens automatisés appropriés pour la commande et le contrôle de paramètres du procédé d'expansion/ réticulation tels que la température, la pression et le débit d'eau de cuisson, notamment.

Selon un autre exemple de réalisation de l'invention, un dispositif de cuisson pour la mise en oeuvre dudit procédé de réticulation et d'expansion, qui est du type comprenant une enceinte qui est pourvue de moyens pour l'introduction et l'extraction de ladite ou chaque ébauche, d'un moyen de réception de ladite ou de chaque ébauche, de moyens de remplissage de ladite enceinte en fluide liquide ou gazeux, et de moyens de chauffage et de mise sous pression du fluide contenu à l'intérieur de ladite enceinte,
est tel que ladite enceinte est pourvue d'une pluralité de moyens de réception respectivement prévus pour recevoir plusieurs ébauches, lesdits moyens de réception étant montés adjacents les uns aux autres sur une conduite destinée au remplissage en fluide de ladite enceinte et s'étendant à l'intérieur de celle-ci.

Selon une autre caractéristique de cet exemple de réalisation, ladite enceinte comporte une conduite de sortie reliée à des moyens de mise en circulation dudit fluide en direction desdits moyens de remplissage de l'enceinte.

Selon un autre exemple de réalisation de l'invention, un dispositif de cuisson pour la mise en oeuvre dudit procédé de réticulation et d'expansion, du type comprenant une enceinte qui est pourvue d'au moins une ouverture pour l'introduction et l'extraction de ladite ou chaque ébauche, de moyens de réception de ladite ou de chaque ébauche, de moyens de remplissage de ladite enceinte en fluide liquide ou gazeux, et de moyens de chauffage et de mise sous pression du fluide contenu à l'intérieur de ladite enceinte, est tel que:
- lesdits moyens de remplissage de l'enceinte sont constitués d'une conduite débouchant sur une ouverture de ladite enceinte, ladite conduite étant pourvue d'un moyen coulissant d'une manière étanche sur la face interne de sa paroi pour la mise sous pression du fluide contenu à l'intérieur de ladite enceinte, cette conduite étant également adaptée pour permettre la vidange de ladite enceinte, et que
- lesdits moyens de chauffage dudit fluide sont montés autour de ladite enceinte et de ladite conduite.

On notera que dans cet exemple de réalisation, le moyen coulissant pour mettre l'intérieur de l'enceinte sous pression peut être de type piston, et que lesdits moyens de chauffage peuvent par exemple comporter un serpentin parcouru par un fluide caloporteur, ou une résistance électrique.

Quant au fluide utilisable dans cet exemple de réalisation, il est de préférence constitué d'un liquide, le point d'ébullition de ce liquide se situant au-delà de la température utilisée pour la cuisson, laquelle peut varier de 110° C à 210° C.

On pourrait toutefois utiliser un gaz, à la condition d'utiliser un gaz dont le poids relatif par rapport à l'air soit adapté pour permettre la mise sous pression de ladite enceinte à partir de ladite conduite de remplissage/ vidange.

Un tronçon d'appui de sécurité selon l'invention, ou un tel appui également selon l'invention, sont obtenus par le procédé de réticulation/ expansion précité, ledit tronçon étant constitué d'une composition de caoutchouc réticulée et expansée présentant une structure cellulaire à cellules fermées.

Avantageusement, ces tronçons ou ces appuis réticulés et expansés selon l'invention peuvent chacun comprendre, radialement vers l'intérieur de leur surface externe, une couche intermédiaire dont l'épaisseur est comprise entre 5 % et 30 % de la plus petite dimension d'une section transversale dudit tronçon ou dudit appui et dont la densité est inférieure à celle du coeur dudit tronçon ou dudit appui.

On notera que ce gradient de densité ne pourrait pas être obtenu par les procédés usuels précités, c'est-à-dire avec une réticulation dans un moule suivie d'une expansion à pression atmosphérique.

Cette couche intermédiaire de basse densité permet de minimiser l'échauffement interne de l'appui en roulage à pression nulle.

Selon une autre caractéristique de l'invention, les tronçons ou les appuis réticulés et expansés obtenus présentent chacun une densité maximale en une couche superficielle à l'emplacement de leur surface externe, radialement à l'extérieur de ladite couche intermédiaire.

On notera que cette couche superficielle, qui présente une densité élevée proche de celle de l'ébauche correspondante non expansée, confère à l'appui ou au tronçon d'appui une résistance de surface qui est adaptée, d'une part, au montage direct sur la jante et, d'autre part, aux contacts répétés avec les reliefs de la face interne d'une enveloppe de pneumatique.

Selon une autre caractéristique de l'invention, les appuis ou tronçons réticulés et expansés obtenus présentent chacun une densité moyenne comprise entre 0,04 et 0,4 et, par exemple, sensiblement égale à 0,13.

On notera qu'une densité moyenne proche de 0,04 permet de disposer d'un appui caractérisé par un amortissement satisfaisant des chocs et par un échauffement interne minimisé. Un tel appui est particulièrement destiné à équiper des pneumatiques de type rallye-raid pour un usage temporaire.

Une densité moyenne proche de 0,4 permet conférer une rigidité structurelle élevée à l'appui correspondant, qui est particulièrement destiné à équiper des pneumatiques portant de lourdes charges.

Quant à une densité moyenne proche de 0,13, elle permet de conférer au coeur de l'appui correspondant une rigidité suffisante, par exemple pour minimiser les déformations de l'appui en roulage imposées par la force centrifuge, lorsque le pneumatique est sous pression de gonflage et lorsque la base de l'appui est solidarisée avec la jante, par exemple par l'intermédiaire d'une armature ou d'un autre agent de liaison avec la jante. Un tel appui est particulièrement destiné à équiper des pneumatiques de type automobile.

Selon une autre caractéristique de l'invention, les diamètres respectifs desdites cellules varient en moyenne de 0,1 mm à 2 mm, sur une section transversale dudit appui ou tronçon.

Avantageusement, ledit tronçon ou ledit appui réticulés et expansés sont chacun à base d'un copolymère d'isoprène et d'isobutylène.

Selon un exemple de réalisation de l'invention, ledit tronçon ou ledit appui réticulés et expansés comprennent chacun, à titre de charge renforçante, un coupage de 10 à 30 pce de silice et de 10 à 30 pce de noir de carbone (pce: parties en poids pour cent parties d'élastomère(s)).

La silice pouvant être utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987) ; la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut par exemple citer la silice Ultrasil VN3 de la société Degussa, ainsi que les silices Zeosil 1165 MP et 1115 MP de la société Rhodia.

Bien entendu on entend également par silice des mélanges de différentes silices, en particulier de silices hautement dispersibles telles que décrites ci-dessus.

Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375. La fraction massique de noir de carbone présent dans la charge renforçante peut varier dans de larges limites, cette quantité allant préférentiellement de 40 % à 60 %, pour une fraction massique de silice allant de 60 % à 40 %.

Selon un exemple de réalisation de l'invention, l'appui ou tronçon d'appui, qui comporte une base destinée à être montée sur ladite jante de roue et un sommet destiné à appuyer sur la bande de roulement de ladite enveloppe de pneumatique suite à une chute de pression à l'intérieur de celle-ci, est tel qu'il présente au moins une rainure longitudinale s'étendant sur ledit sommet sensiblement au droit de ce dernier, dans la direction de la longueur dudit appui ou tronçon d'appui.

Selon un autre exemple de réalisation de l'invention, l'appui ou tronçon d'appui est tel qu'il présente au moins un évidement longitudinal dans sa masse, qui s'étend dans la direction de la longueur dudit appui ou tronçon d'appui.

On notera que ces deux exemples de profils d'appuis ou de tronçons d'appuis, qui peuvent être obtenus grâce au procédé de réticulation/ expansion selon l'invention, ne peuvent pas être obtenus dans des conditions satisfaisantes au moyen des procédés traditionnels utilisant un moule pour la réticulation. En effet, ces profils particuliers rendent l'opération de démoulage particulièrement malaisée.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant faite en relation avec les dessins joints, parmi lesquels:
la Fig. 1 est un schéma illustrant un exemple de dispositif pour la mise en oeuvre du procédé de réticulation/ expansion selon l'invention,
les Figs. 2 et 3 sont des vues schématiques en coupe illustrant un autre exemple de réalisation d'un dispositif de cuisson pour la mise en oeuvre de procédé de réticulation/expansion selon l'invention dans deux positions de fonctionnement, respectivement,
la Fig. 4 est une vue schématique en coupe partielle d'un autre exemple de réalisation d'un dispositif de cuisson selon l'invention pour la mise en oeuvre de ce procédé, et
la Fig. 5 est une vue schématique en coupe d'un appui obtenu par le procédé de réticulation/ expansion selon l'invention.

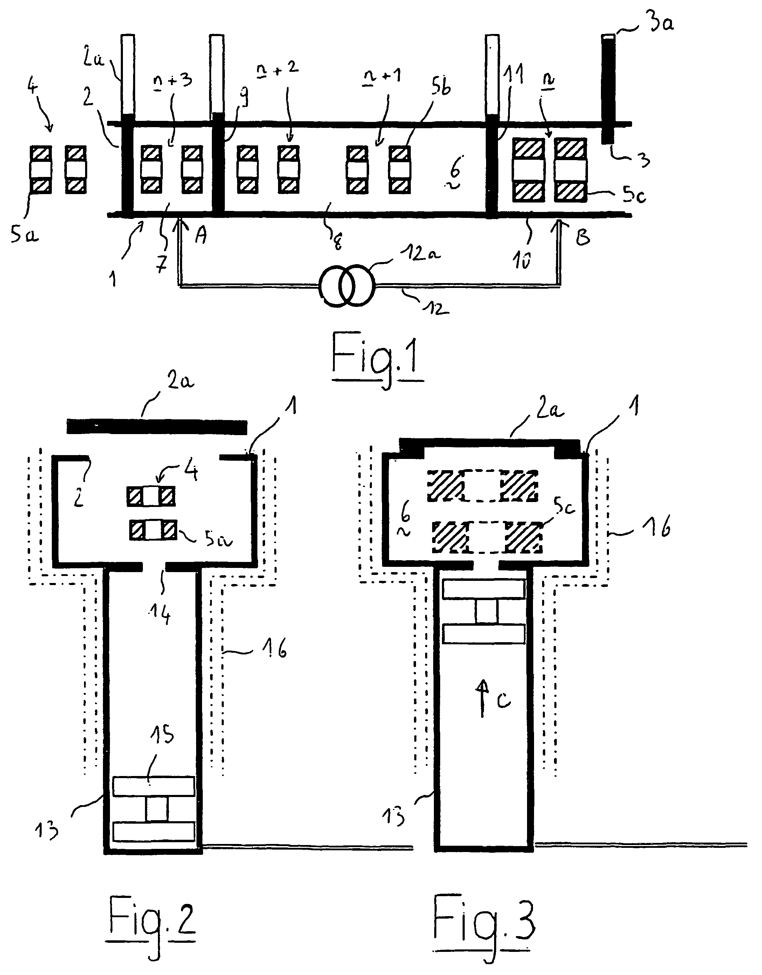

Un dispositif de cuisson selon la Fig. 1 comporte une enceinte 1 qui est pourvue d'au moins une ouverture 2, 3 pour l'introduction et l'extraction d'unités 4 comprenant plusieurs ébauches 5a, 5b, de moyens de réception de chaque ébauche 5a, 5b, de moyens de remplissage de ladite enceinte 1 en fluide 6 liquide ou gazeux, et de moyens de chauffage et de mise sous pression du fluide 6 contenu à l'intérieur de ladite enceinte qui sont commandés par des moyens de commande (ces moyens de réception, de remplissage, de chauffage/ mise sous pression et de commande ne sont pas représentés pour des raisons de clarté).

L'enceinte 1 de la Fig. 1 comporte:
- un compartiment d'introduction 7 pourvu à son entrée d'une ouverture 2 pour l'introduction d'une unité 4 d'ébauches 5a réticulables et expansibles, ladite ouverture d'introduction 2 étant pourvue d'un moyen 2a pour permettre sa libération ou son obturation (cette ouverture 2 est représentée en position obturée à la Fig. 1),
- un compartiment de cuisson 8 prévu en aval du précédent et pourvu à son entrée d'une première cloison mobile 9 pour sa mise en communication avec ledit compartiment d'introduction 7 (cette cloison 9 est représentée en position de cloisonnement étanche à la Fig. 1). Ce compartiment de cuisson 8 est destiné à contenir ledit fluide 6 chauffé et sous pression pour l'obtention d'au moins une unité 4 d'ébauches réticulées et expansibles 5b (dans l'exemple simplement illustratif de la Fig. 1, le compartiment 8 est destiné à recevoir deux unités 4),
- un compartiment d'extraction 10 prévu en aval du précédent, qui est destiné à recevoir une unité 4 desdites ébauches réticulées et expansibles 5b. Ce compartiment 10 est pourvu à son entrée d'une seconde cloison mobile 11 pour sa mise en communication avec ledit compartiment de cuisson 8 (cette cloison 11 est également représentée en position de cloisonnement étanche à la Fig. 1), et à sa sortie d'une ouverture 3 pour l'extraction de ladite enceinte 1 d'une unité 4 d'ébauches réticulées et expansées 5c, ladite ouverture d'extraction 3 (représentée en position ouverte à la Fig. 1) étant pourvue d'un moyen 3a pour sa libération ou son obturation, et
- des moyens 12 pour transférer en alternance le fluide 6 en surpression du compartiment d'extraction 10 vers le compartiment d'introduction 7, et vice versa (on a représenté un organe 12a de mise en mouvement du fluide 6 à la Fig. 1, par exemple constitué d'une pompe).

L'opération de réticulation, qui est réalisée dans le compartiment de cuisson 8, consiste à cuire chaque unité 4 d'ébauches réticulables et expansibles 5a dans un bain de fluide 6 en surpression, de manière que chaque ébauche interagisse avec ledit bain 6 indépendamment du compartiment 8, la température dudit bain 6 comprenant une valeur maximale comprise entre 110° C et 210° C et la pression absolue dudit bain 6 comprenant au moins une valeur égale ou supérieure à 14 bars.

Quant à l'opération d'expansion, elle est initiée dans le compartiment de cuisson 8 lors de la réticulation (l'agent de gonflement présent dans chaque ébauche 5a se décomposant, ce qui initie la germination des cellules), mais l'expansion (au sens usuel d'augmentation de volume, qui est attribué à ce terme dans la présente description) n'a effectivement lieu que dans le compartiment d'extraction 10, lorsque celui-ci est dépourvu du fluide 6 et se trouve rendu à la pression atmosphérique.

Plus précisément, la température dudit bain 6 dans le compartiment de cuisson 8 comprend une valeur maximale comprise entre110° C et 210° C, et la pression absolue dudit bain 6 comprend au moins une valeur égale ou supérieure à 5 bars.

Toujours selon l'invention, l'expansion de chaque ébauche réticulée 5b, qui se produit à une valeur finale de détente de la pression absolue à 1 bar, est réalisée de telle manière que l'augmentation de volume de chaque ébauche 5b soit illimitée vis-à-vis du compartiment d'extraction 10, pour donner l'appui ou partie d'appui réticulé et expansé 5c correspondant.

Ce dispositif peut fonctionner en régime continu, avantageusement directement en aval des postes de façonnage des ébauches (par exemple constitués d'extrudeuses) et des postes de préchauffage en étuve des ébauches façonnées, en reproduisant dans le temps le cycle d'opérations suivantes.

On extrait du compartiment d'extraction 10 une unité 4 d'appuis ou parties d'appuis réticulés et expansés 5c de rang n, puis on actionne la cloison 11 en position de décloisonnement pour remplir de fluide 6 ce compartiment 10 dont l'ouverture 3 a été obturée, de sorte à pouvoir déplacer d'un rang chaque unité 4 contenue dans l'enceinte 1. L'unité de rang n + 1 d'ébauches réticulées et expansibles 5b se trouve ainsi dans ledit compartiment 10, en vue de son expansion.

On introduit parallèlement une unité 4 de rang supérieur (n + 3 dans l'exemple de la Fig. 1) dans le compartiment d'introduction 7, préalablement ouvert à la pression atmosphérique, puis on obture ensuite l'ouverture 3 du compartiment 10 pour transférer vers le compartiment 7 le fluide 6 contenu dans le compartiment d'extraction 10, comme cela est indiqué par la flèche A de la Fig. 1 (la cloison 11 du compartiment 10 ayant été préalablement actionnée en position de cloisonnement).

On ouvre ensuite l'ouverture 3 du compartiment 10, pour permettre l'expansion des ébauches 5b de l'unité 4 de rang n + 1, du fait de l'équilibre à la pression atmosphérique, puis on procède à l'extraction des ébauches 5c réticulées et expansées de cette unité.

Parallèlement, on déplace d'un rang comme indiqué précédemment les unités 4 au sein de l'enceinte 1, l'équilibre en pression entre les compartiment 7 et 8, d'une part, et 8 et 10, d'autre part, rendant possible ce déplacement (la flèche B de la Fig. 1 illustre le transfert du fluide 6 du compartiment 7 vers le compartiment 10), et ainsi de suite.

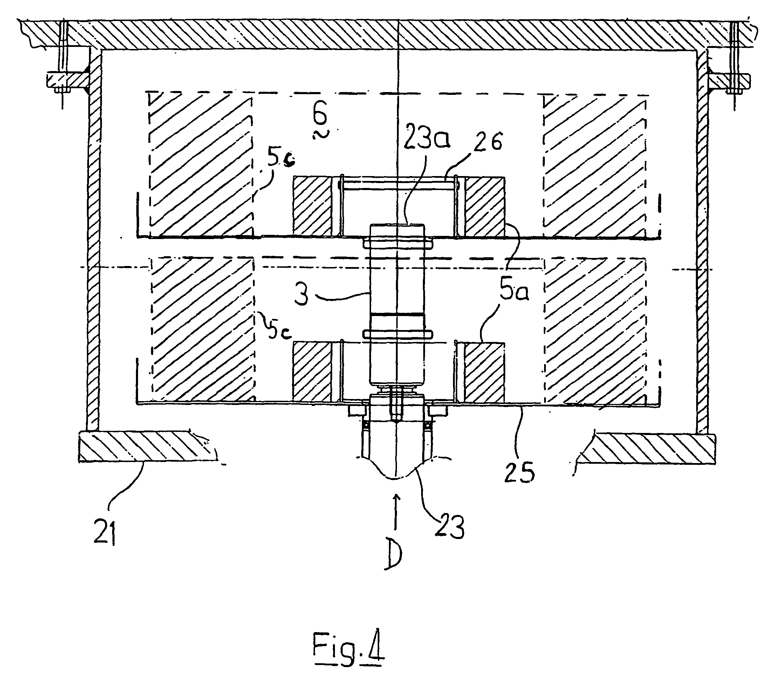

On a représenté aux Figs. 2 et 3 un autre exemple de réalisation d'un dispositif de cuisson selon l'invention pour la réticulation/ expansion d'une unité 4 d'ébauches 5a.

Ce dispositif de cuisson comporte une ouverture 2, pour l'introduction d'une unité 4 d'ébauches réticulables et expansibles 5a (voir Fig. 2) et pour l'extraction de l'unité 4 correspondante des appuis ou parties d'appuis 5c réticulés et expansés, lesquels sont représentés en pointillés à la Fig. 3 (au terme de l'opération d'expansion). Ce dispositif comporte également des moyens de remplissage de l'enceinte 1 qui sont constitués d'une conduite 13 débouchant sur une ouverture 14 de ladite enceinte 1.

La conduite 13 est pourvue d'un moyen 15 coulissant d'une manière étanche sur la face interne de sa paroi pour la mise sous pression du fluide 6 contenu à l'intérieur de ladite enceinte 1 (voir la flèche C à la Fig. 3, dans laquelle l'ouverture 2 a été refermée pour le remplissage de l'enceinte 1 par le fluide 6). Ce moyen 15 est par exemple de type piston.

Le fluide 6 utilisable dans cet exemple de réalisation est de préférence constitué d'un liquide, le point d'ébullition de ce liquide se situant au-delà de la température utilisée pour la réticulation/ expansion, laquelle peut varier de 110° C à 210° C.

De plus, la conduite 13 est également adaptée pour permettre la vidange de ladite enceinte 1.

Ce dispositif de cuisson comporte également des moyens de chauffage 16 du fluide 6 qui sont montés autour de ladite enceinte 1 et de ladite conduite 13. Ces moyens de chauffage 16 peuvent être constitués d'un serpentin parcouru par un fluide caloporteur, ou d'une résistance électrique.

Bien entendu, le dispositif de cuisson des Figs. 2 et 3 comporte des moyens de réception des ébauches 5a à l'intérieur de l'enceinte 1, ainsi que des moyens de commande des paramètres de pression et de température.

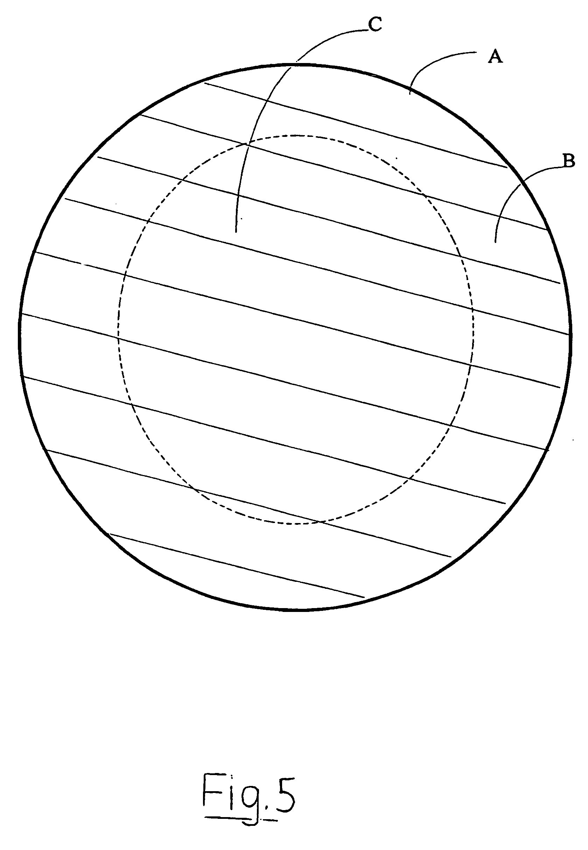

Un autre exemple de dispositif de cuisson selon l'invention est représenté à la Fig. 4.

Ce dispositif est essentiellement constitué d'une enceinte 21 qui est pourvue d'une conduite d'entrée de fluide 23 (voir flèche D) débouchant à l'intérieur de l'enceinte 21 par son extrémité 23a, ladite conduite 23 étant reliée à un circuit de chauffage et de mise sous pression du bain 6 de fluide contenu dans l'enceinte 21, et d'une conduite de sortie de fluide distincte de ladite conduite d'entrée 23 (ce circuit de chauffage/ mise sous pression et ladite conduite de sortie ne sont pas représentés).

Bien entendu, ce dispositif comporte également des moyens pour introduire des ébauches réticulables et expansibles 5a à l'intérieur de l'enceinte 21, ainsi que pour extraire les appuis ou parties d'appuis 5c réticulés et expansés correspondants.

Dans l'exemple de réalisation de la Fig. 4, la conduite d'entrée 23 est adaptée pour supporter à intervalles de hauteur réguliers des plateaux 25 qui sont chacun destinés à recevoir une ébauche 5a, en vue de la réticulation/ expansion de celle-ci.

On a représenté à la Fig. 4 des ébauches 5a de forme globalement torique, cependant on notera que chaque plateau 25 pourrait recevoir des ébauches 5a présentant une forme quelconque, par exemple linéaire, en vue d'obtenir des tronçons linéaires d'appuis en lieu et place d'appuis toriques.

Chaque plateau 25 est pourvu de moyens 26 pour centrer l'ébauche 5a correspondante lors de sa mise en place. Dans l'exemple de la Fig. 4, ces moyens 26 sont constitués d'une cale de centrage autour de laquelle l'ébauche 5a est destinée à être positionnée.

Chacun des deux exemples de dispositif selon l'invention qui viennent d'être décrits, d'une part, en relation avec les Figs. 2 et 3 et, d'autre part, en relation avec la Fig. 4, fonctionnent de la manière suivante.

A l'instar de ce qui a été décrit en relation avec la Fig. 1, l'opération de réticulation consiste à cuire les ébauches réticulables et expansibles 5a dans le bain 6 de fluide en surpression, de manière que chaque ébauche interagisse avec ledit bain 6 indépendamment des parois de l'enceinte 1, 21. Plus précisément, la température du bain 6 comprend une valeur maximale comprise entre 110° C et 210° C et sa pression absolue comprend au moins une valeur égale ou supérieure à 14 bars.

Quant à l'opération d'expansion, elle est initiée dans ledit bain 6 à condition que la température de celui-ci comprenne une valeur maximale comprise entre 110° C et 210° C, et que sa pression absolue comprenne au moins une valeur égale ou supérieure à 5 bars, et l'augmentation de volume de l'ébauche 5a, résultat de l'expansion, se produit réellement après que celle-ci se retrouve à la pression atmosphérique par ouverture de l'enceinte 1, 21 (voir les appuis 5c en pointillés aux Figs. 3 et 4).

Comme cela a été indiqué en relation avec la Fig. 1, on notera que cette expansion est illimitée vis-à-vis des parois de l'enceinte 1, 21.

Concernant le dispositif de cuisson de la Fig. 4, on notera que la cuisson dans le bain 6 peut être avantageusement mise en oeuvre avec un flux de fluide continu, du fait de la circulation permanente du fluide de ladite conduite de sortie vers ladite conduite d'entrée 23.

### PREMIERE SERIE D'ESSAIS POUR LA RETICULATION/ EXPANSION:

On a réalisé une pluralité d'essais, en utilisant pour les ébauches deux compositions de caoutchouc réticulables et expansibles qui sont toutes deux à base de caoutchouc butyl mais qui diffèrent essentiellement l'une de l'autre, en ce sens qu'une première composition A comprend une charge renforçante constituée de noir de carbone, alors qu'une seconde composition B comprend une charge renforçante constituée d'un coupage de noir de carbone et de silice.

Le tableau I ci-après détaille ces différences essentielles.

**Tableau I:**

| (pce: parties en poids pour cent parties d'élastomère). | | |
|---|---|---|
| Constituants introduits dans le mélangeur | Composition A (taux en pce) | Composition B (taux en pce) |
| Noir de carbone N683 | 40 | 20 |
| Silice « Zeosil 1165 MP » | - | 20 |
| agent de gonflement (azobisformamide) | 13 | 13 |

Chaque ébauche a été au préalable préchauffée au moyen d'air chaud dans une étuve électrique sans pression, pendant une durée de 70 minutes et à une température de 90° C.

L'opération de réticulation/ expansion a été réalisée en utilisant de l'eau à titre de fluide de cuisson.

On a utilisé un dispositif tel que celui décrit en relation avec la Fig. 4, de telle manière que le débit de circulation d'eau de ladite conduite de sortie vers ladite conduite d'entrée 23 soit maintenu à 15 litres d'eau par minute.

On a fait figurer dans le tableau II ci-après les conditions opératoires spécifiques qui sont relatives à chaque essai réalisé, avant la détente finale de l'espace intérieur de l'enceinte 21 à la pression atmosphérique pour réaliser l'expansion des ébauches réticulées.

En référence à un palier opératoire de durée prédéterminée (en minutes), sont indiquées les valeurs de pression relative dans l'enceinte 21 (en bars) et de température correspondantes (en ° C). Il en est de même pour l'étape de refroidissement finale.

Concernant la vidange de l'enceinte 21, qui permet de faire passer la pression à l'intérieur de celle-ci d'une valeur de surpression à la valeur finale de détente en vue de réaliser l'expansion des ébauches réticulées (pression atmosphérique), le débit de vidange est réglé de telle manière que le passage de ladite valeur ultime de surpression à la pression atmosphérique s'effectue en un temps suffisamment long, qui dans les essais réalisés est d'au moins 30 secondes.

**Tableau II:**

| Essai | Composition réticulable et expansible | longueur ébauche (mm) | premier palier (bars, min.,° C.) | second palier (bars, min.,° C) | refroidissement (bars, min.,° C) |
|---|---|---|---|---|---|
| n° 1 | A | 412 | 12 - 90 - 142 | - | 12-20-20 |
| n° 2 | A | 355 | 23 - 90 - 142 | - | 23 - 20 - 20 |
| n° 3 | A | 275 | 23 - 50 - 142 | - | 23 - 10 - 20 |
| n° 4 | A | 275 | 16 - 90 - 142 | - | 16 - 20 - 20 |
| n° 5 | A | 275 | 23 - 60 - 142 | 9 - 40 - 142 | 9 - 20 - 20 |
| n° 6 | A | 275 | 16 - 90 - 142 | 9 - 40 - 142 | 9 - 20 - 20 |
| n° 7 | A | 275 | 23 - 60 - 142 | 12 - 40 - 142 | 9 - 20 - 20 |
| n° 8 | B | 275 | 23 - 60 - 142 | 9 - 40 - 142 | 9 - 20 - 20 |

On a procédé à des analyses des appuis qui ont été obtenus au moyen de ces essais. Le tableau III ci-après rend compte des caractéristiques dimensionnelles et cellulaires des appuis obtenus.

Chacun de ces appuis réticulés et expansés est caractérisé, d'une part, par une couche intermédiaire B de quelques mm d'épaisseur radialement vers l'intérieur de sa surface externe et, d'autre part, par une couche superficielle A à l'emplacement de ladite externe (voir Fig. 5).

Concernant la mesure des tailles de cellules dans la couche centrale C de chaque appui, on a distingué les tailles à coeur et à mi-épaisseur.

Concernant la mesure des tailles de cellules dans la couche intermédiaire B (dernière colonne du tableau III), il s'agit de mesures de tailles maximales à 5 mm de la surface externe (couche superficielle A) de chaque appui.

**Tableau III:**

| Appuis réticulés et expansés | largeur (mm) | hauteur (mm) | diamètres maxima des cellules à coeur (mm) | diamètres maxima des cellules à mi-épaisseur (mm) | diamètres maxima des cellules dans la couche B (mm) |
|---|---|---|---|---|---|
| n° 1 (2 appuis réalisés) | 115 165 | 63 110 | non mesurés | non mesurés | non mesurés |
| n° 2 | 182 | 123,5 | 0,2 | 0,2 | 0,3 - 0,5 |
| n° 3 | 105 | 50 | non mesurés | non mesurés | non mesurés |
| n° 4 | 190 | 130 | 0,3 | 0,3 | 0,5 |
| n° 5 | 193 | 106 | 0,5 | 0,5 | 0,5 |
| n° 6 | 197 | 111 | 1 | 1 | 0,7 |
| n° 7 | 192 | 121 | 0,3 | 0,3 | 0,4 |
| n° 8 | 208 | 118 | 1,8 | 1,3 | 0,7 |

L'appui obtenu par l'essai n° 1 présente une réticulation insuffisante, en raison de la valeur insuffisante de la pression qui est utilisée, valeur non conforme à l'invention (12 bars en pression relative).

L'appui obtenu par l'essai n° 2, qui correspond à l'utilisation d'une pression relative de 23 bars dans l'enceinte (valeur maximale utilisée pour l'ensemble des essais), présente une taille de cellules conforme à l'invention (car comprise entre 0,1 et 2 mm).

L'appui obtenu par l'essai n° 3 présente une réticulation et une expansion insuffisantes, en raison d'un temps de séjour trop court dans le bain de cuisson, cette expansion insuffisante résultant du stoppage prématuré de la réaction de décomposition de l'agent de gonflement.

On comprendra qu'une augmentation du temps de séjour de l'ébauche dans le bain de cuisson aurait notamment permis de conférer une expansion accrue à un appui, tel que celui obtenu à l'essai n° 3, par exemple.

L'appui obtenu par l'essai n° 4 (en utilisant un palier unique à la pression relative de 16 bars) présente une réticulation et une expansion satisfaisantes, ainsi qu'une taille de cellules conforme à l'invention.

L'appui obtenu par l'essai n° 5 (en utilisant deux paliers dont les valeurs de pression relative sont respectivement de 23 bars et de 9 bars) présente également une réticulation et une expansion satisfaisantes.

L'appui obtenu par l'essai n° 6 (en utilisant deux paliers dont les valeurs de pression relative sont respectivement de 16 bars et de 9 bars) présente une expansion accrue par rapport à celle de l'appui précédent (essai n° 5), comme le montre la taille des cellules qui est sensiblement doublée.

L'appui obtenu par l'essai n° 7 (en utilisant deux paliers dont les valeurs de pression relative sont respectivement de 23 bars et de 12 bars), présente également des caractéristiques de réticulation et d'expansion satisfaisantes.

Quant à l'appui obtenu par l'essai n° 8, appui comprenant un coupage de noir de carbone et de silice à titre de charge renforçante, il présente lui aussi une réticulation et une expansion satisfaisantes. De plus, cette expansion est très élevée dans le coeur de l'appui.

On notera que chacun des appuis obtenus par le procédé selon l'invention est caractérisé par des diamètres de cellules relativement proches les uns des autres, du coeur à la superficie des appuis. On a par ailleurs vérifié que la couche intermédiaire B de chaque appui selon l'invention est d'une épaisseur inférieure à celle des appuis connus obtenus par des procédés traditionnels, et que cette couche B présente une densité globalement inférieure à celle de la couche B correspondante d'un tel appui connu.

On notera également que la taille moyenne des cellules sur une section transversale d'appui est la plus élevée lorsque les pressions relatives des premier et second paliers sont respectivement de 16 bars et 9 bars (essai n° 6), alors qu'elle est au contraire la plus réduite dans le cas de l'utilisation d'un palier unique de pression relative à 23 bars (essai n° 2).

### SECONDE SERIE D'ESSAIS POUR LA RETICULATION/ EXPANSION:

On a réalisé une pluralité d'essais selon l'invention, en utilisant pour les ébauches 4 compositions de caoutchouc comprenant lesdites compositions A et B et 2 autres compositions C et D réticulables et expansibles, qui sont toutes à base de caoutchouc butyl.

Le tableau IV ci-après détaille les formulations respectives de ces compositions C et D.

**Tableau IV:**

| (pce: parties en poids pour cent parties d'élastomère). | | |
|---|---|---|
| Constituants introduits dans le mélangeur | Composition C (taux en pce) | Composition D (taux en pce) |
| Noir de carbone N683 | 40 | 40 |
| Silice « Zeosil 1165 MP » | - | - |
| agent de gonflement (azobisformamide) | 12 | 11 |

Chaque ébauche a été au préalable préchauffée au moyen d'air chaud dans une étuve ventilée, pendant une durée de 70 minutes et à une température d'environ 100° C.

L'opération de réticulation/ expansion est comme précédemment réalisée au moyen d'un flux d'eau continu, au moyen d'un dispositif tel que celui de la Fig. 4, de telle manière que les débits de circulation et de vidange (pour la réticulation et l'expansion, respectivement) soient maintenus à 15 litres d'eau par minute.

On a fait figurer dans le tableau V ci-après les conditions opératoires spécifiques qui sont relatives à chaque essai réalisé, avant de procéder à la détente de l'espace intérieur de l'enceinte 21 à la pression atmosphérique pour réaliser l'expansion des ébauches réticulées.

En référence à un palier opératoire de durée prédéterminée (en minutes), sont indiquées les valeurs de pression (en bars) et de température correspondantes (en ° C). Il en est de même pour l'étape de refroidissement finale.

**Tableau V:**

| Essai | Comp. réticulable et expansible | périmètre ébauche (mm) | masse ébauche (g) | premier palier (bars, min.,° C.) | second palier (bars, min.,° C) | refroidissement (bars, min.,° C) |
|---|---|---|---|---|---|---|
| n° 9 | A | 871 | 2785 | 23 - 95 - 142 | | 23 - 15 - 20 |
| n° 10 | A | 868 | 2738 | 23 - 55 - 146 | | |
| n° 11 | A | 859 | 2755 | 23 - 60 - 142 | 12 - 50 - 142 | 12 - 20 - 20 |
| n° 12 | A | 870 | 2782 | 23 - 60 - 142 | 9 - 40 - 142 | 9-20-20 |
| n° 13 | A | 856 | 2748 | 16 - 60 - 142 | 9 - 50 - 142 | 9 - 20 - 20 |
| n° 14 | A | 872 | 2778 | 16 - 60 - 142 | 12 - 40 - 142 | 12 - 20 - 20 |
| n° 15 | A | 867 | 2768 | 23 - 60 - 142 | 9 - 40 - 142 | 9 - 20 - 20 |
| n° 16 | A | 873 | 2768 | 23 - 60 - 142 | 9 - 40 - 142 | 9-20-20 |
| n° 17 | A | 869 | 2728 | 16 - 60 - 142 | 12 - 50 - 142 | |
| n° 18 | A | 856 | 2754 | 23 - 30 - 142 | 12 - 40 - 142 | 12 - 20 - 20 |
| n° 19 | A | 866 | 2763 | 23 - 60 -142 | 9 - 40 - 142 | 9 - 20 - 20 |
| n° 20 | A | 868 | 2768 | 23 - 60 - 142 | 9 - 40 - 142 | 9 - 20 - 20 |
| n° 21 | A | 869 | 2772 | 23 - 60 - 142 | 9 - 40 - 142 | 9 - 20 - 20 |
| n° 22 | A | 867 | 2784 | 23 - 30 - 142 | 12 - 80 - 142 | 12 - 20 - 20 |
| n° 23 | D | 876 | 2765 | 23 - 60 - 142 | 9 - 40 - 142 | 9 - 20 - 20 |
| n° 24 | C | 976 | 1140 | 23 - 30 - 146 | 9 - 30 - 146 | 9 - 10 - 20 |
| n° 25 | C | 982 | 1144 | 23 - 30- 146 | 9 - 40 - 146 | 9 - 20 - 20 |
| n° 26 | B | 814 | 2726 | 23 - 60 - 142 | 9 - 60 - 142 | 9 - 20 - 20 |
| n° 27 | B | 848 | 2746 | 23 - 60 - 142 | 9 - 50 - 142 | 9 - 20 - 20 |
| n° 28 | B | 865 | 2738 | 23 - 60 - 142 | 9 - 60 - 142 | 9 - 20 - 20 |

On a procédé à des analyses des appuis qui ont été obtenus par ces essais. Le tableau VI ci-après rend compte des caractéristiques dimensionnelles et cellulaires de ces appuis.

Les volumes des appuis réticulés et expansés obtenus ont été déterminés en utilisant un facteur de forme égal à 0,8 (section réelle de l'appui / section rectangulaire dans laquelle cette section réelle est circonscrite).

**Tableau VI:**

| Appuis réticulés et expansés | masse appui (g) | périmètre extérieur (mm) | périmètre intérieur (mm) | largeur (mm) | Volume (litres) | Densité moyenne |
|---|---|---|---|---|---|---|
| n° 9 | 2755 | 1907 | 1110 | 170 | 26,489 | 0,104 |
| n° 10 | 2708 | - | - | - | - | - |
| n° 11 | 2725 | 2007 | 1275 | 178 | 28,362 | 0,096 |
| n° 12 | 2752 | 2018 | 1300 | 178 | 28,212 | 0,098 |
| n° 13 | 2718 | 1987 | 1230 | 175 | 28,024 | 0,097 |
| n° 14 | 2748 | 1978 | 1190 | 163 | 26,211 | 0,105 |
| n° 15 | 2738 | 2002 | 1295 | 181 | 28,212 | 0,097 |
| n° 16 | 2738 | 2028 | 1320 | 185 | 29,414 | 0,093 |
| n° 17 | 2698 | 2050 | 1225 | 177 | 31,024 | 0,087 |
| n° 18 | 2724 | 1975 | 1236 | 183 | 28,885 | 0,094 |
| n° 19 | 2733 | 2022 | 1300 | 180 | 28,749 | 0,095 |
| n° 20 | 2738 | 2060 | 1345 | 182 | 29,602 | 0,092 |
| n° 21 | 2742 | 2048 | 1330 | 184 | 28,846 | 0,092 |
| n° 22 | 2754 | 1975 | 1203 | 173 | 27,757 | 0,099 |
| n° 23 | 2735 | 1800 | 1200 | 171 | 20,905 | 0,131 |
| n° 24 | 1110 | 2005 | 1455 | 87,5 | 10,085 | 0,110 |
| n° 25 | 1114 | 2033 | 1474 | 89 | 10,574 | 0,105 |
| n° 26 | 2696 | 1850 | 1020 | 170 | 26,034 | 0,104 |
| n° 27 | 2716 | 1900 | 1200 | 173 | 24,964 | 0,109 |
| n° 28 | 2708 | 1942 | 1185 | 160 | 24,500 | 0,111 |

On notera que la densité moyenne d'un appui réticulé et expansé selon l'invention peut varier dans une large mesure entre 0,04 et 0,4, des densités moyennes proches de 0,04 ou de 0,4 pouvant être respectivement obtenues de manière connue par l'homme du métier en augmentant ou en réduisant le taux d'agent de gonflement dans la composition de caoutchouc correspondante.

On notera également que la densité moyenne proche de 0,13 qui a été par exemple obtenue par l'essai n° 23 permet de conférer au coeur de l'appui correspondant une rigidité qui est adaptée pour minimiser sa déformation en roulage en raison de la force centrifuge.

Les résultats de volume d'appui mentionnés dans ce tableau VI montrent que les appuis n° 11 à 28 présentent une réticulation et une expansion satisfaisantes, cette expansion étant favorisée par le second palier de pression à 9 ou 12 bars (faisant suite à un premier palier à 23 ou 16 bars permettant la réticulation).

On a également pu vérifier que chaque appui selon l'invention est caractérisé par des diamètres de cellules très proches les uns des autres, du coeur à la superficie des appuis.

On a par ailleurs vérifié que la couche intermédiaire B que présente chaque appui selon l'invention a une épaisseur de moins de 5 mm, contrairement à celles des appuis traditionnels qui sont généralement comprises entre 8 et 25 mm (pour des appuis de largeur et de hauteur respectivement voisines de 200 mm et 120 mm), ce qui permet de minimiser la propagation dans le coeur de l'appui les déformations dues aux contraintes de cisaillement et, par conséquent, l'échauffement interne de ce dernier en roulage à pression nulle.

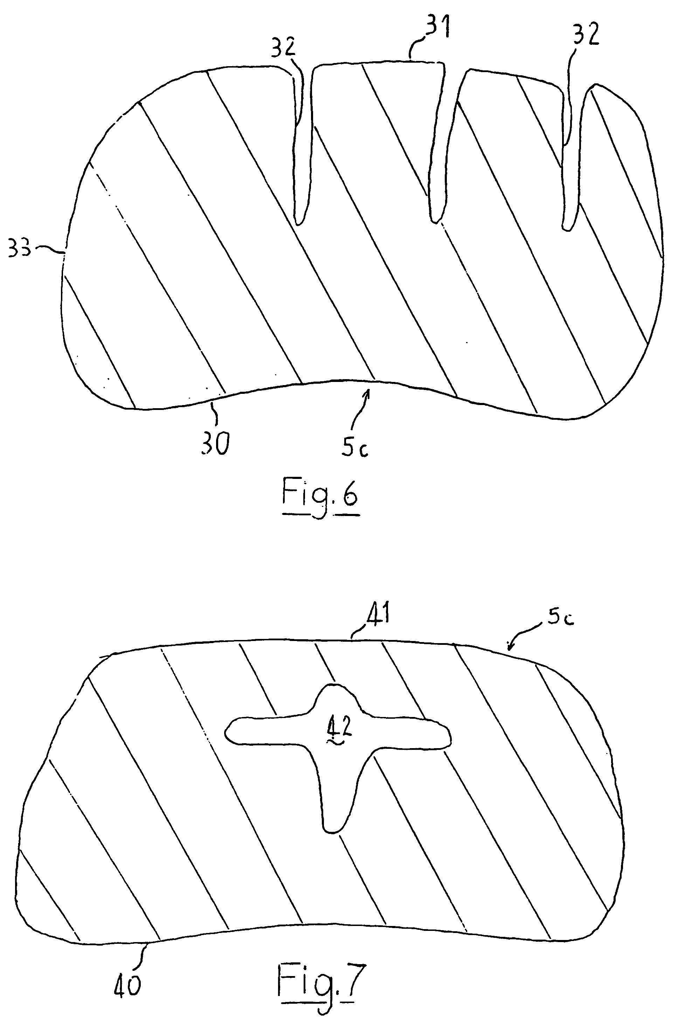

On a représenté aux Figs. 6 et 7 deux exemples de réalisation de profils d'appuis réticulés et expansés qui peuvent être obtenus par le procédé de réticulation/ expansion selon l'invention, c'est-à-dire par un procédé permettant de se passer d'un moule pour la réticulation.
- Selon l'exemple de réalisation de la Fig. 6, l'appui 5c obtenu comporte une base 30 qui est destinée à être montée sur une jante de roue soit directement, soit par l'intermédiaire d'une armature ou d'un autre agent de liaison, et un sommet 31 qui est destiné à appuyer sur une bande de roulement d'enveloppe de pneumatique, suite à une chute de pression à l'intérieur de celle-ci.
   Cet appui 5c présente dans cet exemple plusieurs rainures longitudinales 32 s'étendant sur le sommet 31, sensiblement au droit de ce dernier et dans la direction de la longueur de l'appui 5c.
   On notera que le procédé selon l'invention permet également d'obtenir des profils d'appuis 5c présentant, en plus desdites seules rainures 32, d'autres rainures longitudinales (non représentées) dans l'une au moins des deux autres directions de l'appui 5c (par exemple des rainures sur la face 33 de l'appui reliant la base 30 et le sommet 31 entre eux).
- Selon l'exemple de réalisation de la Fig. 7, l'appui 5c obtenu présente entre sa base 40 et son sommet 41 un évidement longitudinal 42 dans sa masse, qui s'étend dans la direction de sa longueur.

On notera que ces deux exemples de profils d'appuis ne pourraient pas être obtenus dans des conditions satisfaisantes au moyen des procédés traditionnels utilisant un moule pour la réticulation, car leurs géométries respectives ne permettent pas un démoulage dans des conditions satisfaisantes, c'est-à-dire sans fragiliser l'appui démoulé.

## Revendications

1. Procédé d'expansion d'au moins une ébauche partiellement réticulée (5b) qui est destinée à constituer à l'état réticulé et expansé tout ou partie d'un appui de sécurité élastomère (5c) de structure cellulaire à cellules fermées, ledit appui (5c) étant destiné à être monté sur une jante de roue à l'intérieur d'une enveloppe de pneumatique,
**caractérisé en ce qu'**il consiste à cuire ladite ou chaque ébauche (5b) dans un bain (6) de fluide en surpression contenu à l'intérieur d'une enceinte (1, 21), la température dudit bain (6) comprenant une valeur maximale comprise entre 110° C et 210° C, et la pression absolue dudit bain (6) comprenant au moins une valeur égale ou supérieure à 5 bars et une valeur finale de détente sensiblement égale à 1 bar, pour l'expansion de ladite ou de chaque ébauche (5b) de telle manière que l'augmentation de volume de celle-ci soit illimitée vis-à-vis de ladite enceinte (1, 21).

2. Procédé d'expansion selon la revendication 1, **caractérisé en ce qu'**il consiste à faire varier d'une manière discrète ou continue ladite pression absolue dudit fluide entre une valeur maximale inférieure ou égale à 26 bars et une valeur inférieure à ladite valeur maximale.

3. Procédé d'expansion selon la revendication 1 ou 2, **caractérisé en ce qu'**il consiste à utiliser un fluide liquide pour cuire ladite ou chaque ébauche (5b).

4. Procédé d'expansion selon la revendication 1 ou 2, **caractérisé en ce qu'**il consiste à utiliser un fluide gazeux pour cuire ladite ou chaque ébauche (5b).

5. Procédé d'expansion selon une des revendications précédentes, **caractérisé en ce qu'**il consiste à refroidir ledit bain (6) à une température inférieure ou égale à 100° C et à une pression absolue comprise entre 1 bar et 26 bars, suite à la cuisson de ladite ou de chaque ébauche (5b).

6. Procédé d'expansion selon une des revendications précédentes, **caractérisé en ce qu'**il consiste à cuire dans ledit bain (6) plusieurs ébauches (5b) de formes linéaires et/ou incurvées.

7. Procédé de réticulation et d'expansion d'au moins une ébauche réticulable et expansible (5a) qui est destinée à constituer à l'état réticulé et expansé tout ou partie d'un appui de sécurité élastomère (5c) de structure cellulaire à cellules fermées, ledit appui (5c) étant destiné à être monté sur une jante de roue à l'intérieur d'une enveloppe de pneumatique, **caractérisé en ce que**:
- ladite réticulation consiste à cuire ladite ou chaque ébauche expansible ou expansée (5a) dans un bain (6) de fluide en surpression contenu à l'intérieur d'une enceinte (1, 21), de telle manière que ladite ou chaque ébauche (5a) interagisse avec ledit bain (6) indépendamment de ladite enceinte (1, 21), la température dudit bain (6) comprenant une valeur maximale comprise entre 110° C et 210° C et la pression absolue dudit bain (6) comprenant au moins une valeur égale ou supérieure à 14 bars, et **en ce que**
- ladite expansion consiste à soumettre ladite ou chaque ébauche réticulable ou réticulée (5a, 5b) à un procédé d'expansion selon une des revendications 1 à 6.

8. Procédé de réticulation et d'expansion selon la revendication 7, **caractérisé en ce qu'**il consiste:
- dans une première étape, à soumettre ladite ou chaque ébauche réticulable et expansible (5a) à ladite réticulation pour l'obtention d'une ébauche pratiquement réticulée et expansible (5b), puis
- dans une seconde étape, à soumettre ladite ou chaque ébauche pratiquement réticulée et expansible (5b) obtenue suite à ladite première étape à ladite expansion, pour l'obtention de tout ou partie dudit appui de sécurité réticulé et expansé (5c) correspondant.

9. Procédé de réticulation et d'expansion selon la revendication 7, **caractérisé en ce qu'**il consiste:
- dans une première étape, à soumettre ladite ou chaque ébauche réticulable et expansible (5a) à ladite expansion pour l'obtention d'une ébauche réticulable et pratiquement expansée, puis
- dans une seconde étape, à soumettre ladite ou chaque ébauche réticulable et pratiquement expansée à ladite réticulation pour l'obtention de tout ou partie dudit appui de sécurité réticulé et expansé (5c) correspondant.

10. Dispositif de cuisson pour la mise en oeuvre du procédé de réticulation et d'expansion selon une des revendications 7 à 9, du type comprenant une enceinte (1) qui est pourvue d'au moins une ouverture (2, 3) pour l'introduction et l'extraction de ladite ou chaque ébauche (5a, 5c), de moyens de réception (25) de ladite ou de chaque ébauche (5a), de moyens de remplissage (23) de ladite enceinte (1) en fluide liquide ou gazeux, et de moyens de chauffage (16) et de mise sous pression (15) du fluide contenu à l'intérieur de ladite enceinte (1),
**caractérisé en ce que** ladite enceinte (1) comporte:
- un compartiment d'introduction (7) pourvu à son entrée d'une ouverture (2) pour l'introduction dans ledit compartiment (7) d'une unité (4) d'ébauches réticulables et expansibles (5a) en vue de sa cuisson, ladite ouverture d'introduction (2) étant pourvue d'un moyen (2a) pour son obturation,
- un compartiment de cuisson (8) prévu en aval dudit compartiment d'introduction (7) et pourvu à son entrée d'une première cloison mobile (9) pour sa mise en communication avec ledit compartiment d'introduction (7), ledit compartiment de cuisson (8) étant destiné à contenir ledit fluide chauffé et sous pression pour l'obtention d'une unité (4) d'ébauches réticulées et expansibles (5b), et
- un compartiment d'extraction (10) prévu en aval dudit compartiment de cuisson (8), pourvu à son entrée d'une seconde cloison mobile (11) pour sa mise en communication avec ledit compartiment de cuisson (8) et à sa sortie d'une ouverture (3) à la pression atmosphérique pour l'extraction de ladite enceinte (1) d'une unité (4) d'ébauches réticulées et expansées (5c), ladite ouverture d'extraction (3) étant pourvue d'un moyen (3a) pour son obturation,
- des moyens (12) pour transférer en alternance ledit fluide en surpression dudit compartiment d'extraction (10) vers ledit compartiment d'introduction (7), et dudit compartiment d'introduction (7) vers ledit compartiment d'extraction (10).

11. Dispositif de cuisson pour la mise en oeuvre du procédé de réticulation et d'expansion selon une des revendications 7 à 9, du type comprenant une enceinte (21) qui est pourvue de moyens pour l'introduction et l'extraction de ladite ou chaque ébauche (5a, 5c), d'un moyen de réception (25) de ladite ou de chaque ébauche (5a, 5c), de moyens de remplissage (23) de ladite enceinte (21) en fluide liquide ou gazeux, et de moyens de chauffage et de mise sous pression du fluide contenu à l'intérieur de ladite enceinte (21),
**caractérisé en ce que** ladite enceinte (21) est pourvue d'une pluralité de moyens de réception (25), montés adjacents les uns aux autres sur une conduite (23) destinée au remplissage en fluide de ladite enceinte (21) et s'étendant à l'intérieur de celle-ci.

12. Dispositif de cuisson selon la revendication 11, **caractérisé en ce que** ladite enceinte (21) comporte une conduite de sortie reliée à des moyens de mise en circulation dudit fluide en direction desdits moyens de remplissage (23) de l'enceinte (21).

13. Dispositif de cuisson pour la mise en oeuvre du procédé de réticulation et d'expansion selon une des revendications 7 à 9, du type comprenant une enceinte (1) qui est pourvue d'au moins une ouverture (2) pour l'introduction et l'extraction de ladite ou chaque ébauche (5a, 5c), de moyens de réception de ladite ou de chaque ébauche (5a, 5c), de moyens de remplissage (13) de ladite enceinte (1) en fluide liquide ou gazeux, et de moyens de chauffage (16) et de mise sous pression du fluide contenu à l'intérieur de ladite enceinte (1), **caractérisé en ce que**
- lesdits moyens de remplissage (13) de l'enceinte (1) sont constitués d'une conduite débouchant sur une ouverture (14) de ladite enceinte (1), ladite conduite (13) étant pourvue d'un moyen (15) coulissant d'une manière étanche sur la face interne de sa paroi pour la mise sous pression du fluide contenu à l'intérieur de ladite enceinte (1), cette conduite (13) étant également adaptée pour permettre la vidange de ladite enceinte (1), et
- **en ce que** lesdits moyens de chauffage (16) dudit fluide sont montés autour de ladite enceinte (1) et de ladite conduite (13).

14. Appui de sécurité (5c) pour pneumatique ou tronçon dudit appui (5c) obtenu par un procédé selon une des revendications 7 à 9, ledit appui ou ledit tronçon (5c) étant constitué d'une composition de caoutchouc réticulée et expansée présentant une structure cellulaire à cellules fermées, ledit appui (5c) étant destiné à être monté sur une jante de roue à l'intérieur d'une enveloppe de pneumatique, **caractérisé en ce qu'**il comprend, radialement vers l'intérieur de sa surface externe, une couche intermédiaire (B) dont l'épaisseur est comprise entre 5 % et 30 % de la plus petite dimension d'une section transversale dudit tronçon (5c) et dont la densité est inférieure à celle du coeur (C) dudit tronçon (5c).

15. Appui ou tronçon dudit appui (5c) selon la revendication 14, **caractérisé en ce qu'**il présente une densité maximale en une couche superficielle (A) à l'emplacement de sa surface externe, radialement à l'extérieur de ladite couche intermédiaire (B).

16. Appui ou tronçon dudit appui (5c) selon la revendication 14 ou 15, **caractérisé en ce qu'**il présente une densité moyenne comprise entre 0,04 et 0,4.

17. Appui ou tronçon dudit appui (5c) selon la revendication 16, **caractérisé en ce qu'**il présente une densité moyenne sensiblement égale à 0,13.

18. Appui ou tronçon dudit appui (5c) selon une des revendications 14 à 17, **caractérisé en ce que** les diamètres respectifs desdites cellules varient en moyenne de 0,1 mm à 2 mm, sur une section transversale dudit appui ou tronçon (5c).

19. Appui ou tronçon dudit appui (5c) selon une des revendications 14 à 18, **caractérisé en ce qu'**il consiste à utiliser une ou plusieurs ébauches (5a) qui sont chacune à base d'un copolymère d'isoprène et d'isobutylène.

20. Appui ou tronçon dudit appui (5c) selon une des revendications 14 à 19, **caractérisé en ce qu'**il comprend, à titre de charge renforçante, un coupage de 10 à 30 pce de silice et de 10 à 30 pce de noir de carbone (pce: parties en poids pour cent parties d'élastomère(s)).

21. Appui ou tronçon dudit appui (5c) selon une des revendications 14 à 20, comportant une base (30, 40) destinée à être montée sur ladite jante de roue et un sommet (31, 41) destiné à appuyer sur la bande de roulement de ladite enveloppe de pneumatique suite à une chute de pression à l'intérieur de celle-ci, **caractérisé en ce qu'**il présente au moins une rainure longitudinale (32) s'étendant sur ledit sommet (31) sensiblement au droit de ce dernier, dans la direction de la longueur dudit appui ou tronçon d'appui (5c).

22. Appui ou tronçon dudit appui (5c) selon une des revendications 14 à 20, **caractérisé en ce qu'**il présente au moins un évidement longitudinal (42) dans sa masse, qui s'étend dans la direction de la longueur dudit appui ou tronçon d'appui (5c).

23. Appui (5c) selon une des revendications 14 à 22, **caractérisé en ce qu'**il présente sensiblement une forme de tore.

24. Tronçon d'appui (5c) selon une des revendications 14 à 22, **caractérisé en ce qu'**il présente sensiblement une forme de portion de tore.

25. Tronçon d'appui (5c) selon une des revendications 14 à 22, **caractérisé en ce qu'**il présente sensiblement une forme linéaire.

## Patentansprüche

1. Verfahren zum Expandieren mindestens eines teilweise vernetzten Rohlings (5b), der dafür vorgesehen ist, im vernetzten und expandierten Zustand eine elastomere Sicherheitsauflage (5c) mit geschlossenzelliger Struktur oder ein Teil einer solchen Sicherheitsauflage (5c) zu bilden, wobei die Auflage (5c) dafür vorgesehen ist, auf einer Radfelge im Inneren eines Luftreifens montiert zu werden,
**dadurch gekennzeichnet, dass** es darin besteht, den oder jeden Rohling (5b) in einem unter einem Überdruck stehenden Fluidbad (6) zu härten, das sich im Inneren eines Behälters befindet (1, 21), wobei die Temperatur des Bades (6) einen Maximalwert aufweist, der im Bereich von 110 bis 210 °C liegt, und wobei der Absolutdruck des Bades (6) mindestens einen Wert von 5 bar oder darüber und durch Druckminderung einen Endwert des Druckes von etwa 1 bar aufweist, für die Expansion des oder jedes Rohlings (5b) in einer solchen Weise, dass die Volumenzunahme des oder jedes Rohlings nicht durch den Behälters (1, 21) eingeschränkt wird.

2. Expansionsverfahren nach Anspruch 1, **dadurch gekennzeichnet, dass** es darin besteht, den Absolutdruck des Fluids stufenweise oder kontinuierlich zwischen einem Maximalwert von 26 bar oder darunter und einem Wert unterhalb dieses Maximalwertes zu ändern.

3. Expansionsverfahren nach Anspruch 1 oder 2, **dadurch gekennzeichnet, dass** es darin besteht, ein flüssiges Fluid zu verwenden, um den oder jeden Rohling (5b) zu härten.

4. Expansionsverfahren nach Anspruch 1 oder 2, **dadurch gekennzeichnet, dass** es darin besteht, ein gasförmiges Fluid zu verwenden, um den oder jeden Rohling (5b) zu härten.

5. Expansionsverfahren nach einem der vorhergehenden Ansprüche, **dadurch gekennzeichnet, dass** es darin besteht, nach dem Härten des oder jedes Rohlings (5b) das Bad (6) auf eine Temperatur von 100 °C oder darunter abzukühlen bei einem Absolutdruck, der im Bereich von 1 bis 26 bar liegt.

6. Expansionsverfahren nach einem der vorhergehenden Ansprüche, **dadurch gekennzeichnet, dass** es darin besteht, mehrere Rohlinge (5b) mit linearer und/oder gekrümmter Form zu härten.

7. Verfahren zum Vernetzen und Expandieren mindestens eines vernetzbaren und expandierbaren Rohlings (5a), der dafür vorgesehen ist, im vernetzten und expandierten Zustand eine elastomere Sicherheitsauflage (5c) mit geschlossenzelliger Struktur oder ein Teil einer solchen Sicherheitsauflage (5c) zu bilden, wobei die Auflage (5c) dafür vorgesehen ist, auf einer Reifenfelge im Inneren eines Luftreifens montiert zu werden,
**dadurch gekennzeichnet,**
- **dass** die Vernetzung darin besteht, den oder jeden expandierbaren oder expandierten Rohling (5a) in einem unter einem Überdruck stehenden Fluidbad (6), das im Inneren eines Behälters (1, 21) enthalten ist, so zu härten, dass der oder jeder Rohling (5a) ohne eine Einschränkung durch den Behälter (1, 21) mit dem Bad (6) in Wechselwirkung tritt, wobei die Temperatur des Bades (6) einen Maximalwert aufweist, der im Bereich von 110 bis 210 °C liegt, und wobei der Absolutdruck des Bades (6) mindestens einen Wert von 14 bar oder darüber hat, und
- **dass** die Expansion darin besteht, den oder jeden vernetzbaren oder vernetzten Rohling (5a, 5b) einem Expansionsverfahren nach einem der Ansprüche 1 bis 6 zu unterziehen.

8. Vernetzungs- und Expansionsverfahren nach Anspruch 7,
**dadurch gekennzeichnet, dass** es darin besteht,
- in einem ersten Schritt den oder jeden vernetzbaren und expandierbaren Rohling (5a) der Vernetzung zu unterziehen, um einen weitgehend vernetzten und expandierbaren Rohling (5b) zu erhalten, und dann
- in einem zweiten Schritt den oder jeden weitgehend vernetzten und expandierbaren Rohling (5b), der im ersten Schritt erhalten wurde, der Expansion zu unterziehen, um die entsprechende vernetzte und expandierte Sicherheitsauflage (5c) oder ein Teil dieser Sicherheitsauflage (5c) zu erhalten.

9. Vernetzungs- und Expansionsverfahren nach Anspruch 7,
**dadurch gekennzeichnet, dass** es darin besteht,
- in einem ersten Schritt den oder jeden vernetzbaren und expandierbaren Rohling (5a) der Expansion zu unterziehen, um einen vernetzbaren und weitgehend expandierten Rohling zu erhalten, und dann
- in einem zweiten Schritt den oder jeden vernetzbaren und weitgehend expandierten Rohling (5b) der Vernetzung zu unterziehen, um die entsprechende vernetzte und expandierte Sicherheitsauflage (5c) oder ein Teil dieser Sicherheitsauflage (5c) zu erhalten.

10. Härtungsvorrichtung für die Durchführung des Vernetzungs- und Expansionsverfahrens nach einem der Ansprüche 7 bis 9 des Typs, der einen Behälter (1) umfasst, der mit mindestens einer Öffnung (2, 3) zum Zuführen und Entnehmen des oder jedes Rohlings (5a, 5c), einer Einrichtung (25) zum Aufnehmen des oder jedes Rohlings (5a), einer Einrichtung (23) zum Befüllen des Behälters (1) mit einem flüssigen oder gasförmigen Fluid, und einer Einrichtung (16) zum Erhitzen des Fluids (16) und Ausüben von Druck (15) auf das Fluid, das im Inneren des Behälters (1) enthalten ist, ausgestattet ist, **dadurch gekennzeichnet, dass** der Behälter (1) umfasst:
- eine Zufuhrkammer (7), die an ihrem Einlass mit einer Öffnung (2) ausgestattet ist, durch die eine Einheit (4) vernetzbarer und expandierbarer Rohlinge (5a) mit dem Ziel ihrer Härtung in diese Kammer (7) eingebracht wird, wobei die Zufuhröffnung (2) mit einer Einrichtung (2a) zum Absperren dieser Öffnung (2) ausgestattet ist,
- eine Härtungskammer (8), die stromabwärts der Zufuhrkammer (7) vorgesehen ist und die an ihrem Einlass mit einer ersten beweglichen Trennwand (9) ausgestattet ist, um diese Kammer mit der Zufuhrkammer (7) verbinden zu können, wobei die Härtungskammer (8) dafür vorgesehen ist, das erhitzte und unter Druck stehende Fluid zu enthalten, für den Erhalt einer Einheit (4) vernetzter und expandierbarer Rohlinge (5b),
- eine Entnahmekammer (10), die stromabwärts der Härtungskammer (8) vorgesehen ist, die an ihrem Einlass mit einer zweiten beweglichen Trennwand (11), um diese Kammer mit der Härtungskammer (8) verbinden zu können, und an ihrem Auslass mit einer Öffnung (3) zum Atmosphärendruck ausgestattet ist, für die Entnahme einer Einheit (4) vernetzter und expandierter Rohlinge (5c) aus dem Behälter (1), wobei die Entnahmeöffnung (3) mit einer Einrichtung (3a) zum Absperren der Entnahmeöffnung ausgestattet ist,
- eine Einrichtung (12), um das unter Überdruck stehende Fluid abwechselnd von der Entnahmekammer (10) in die Zufuhrkammer (7) und von der Zufuhrbereich (7) in die Entnahmekammer (10) zu leiten.

11. Härtungsvorrichtung für die Durchführung des Vernetzungs- und Expansionsverfahrens nach einem der Ansprüche 7 bis 9 des Typs, der einen Behälter (21) umfasst, der mit einer Einrichtung zum Zuführen und Entnehmen des oder jedes Rohlings (5a, 5c), einer Einrichtung (25) zum Aufnehmen des oder jedes Rohlings (5a, 5c), einer Einrichtung (23) zum Befüllen des Behälters (21) mit einem flüssigen oder gasförmigen Fluid, und einer Einrichtung zum Erhitzen des Fluids und Ausüben von Druck auf das Fluid, das im Inneren des Behälters (21) enthalten ist, ausgestattet ist,
**dadurch gekennzeichnet, dass** der Behälter (21) mit einer Vielzahl von Aufnahmeeinrichtungen (25) ausgestattet ist, die nebeneinander auf einer Leitung (23) montiert sind, die für das Befüllen des Behälters (21) mit dem Fluid vorgesehen ist und die sich in das Innere des Behälters (21) erstreckt.

12. Härtungsvorrichtung nach Anspruch 11, **dadurch gekennzeichnet, dass** der Behälter (21) eine Ablassleitung umfasst, die mit einer Einrichtung zum Umwälzen des Fluids in Richtung der Einrichtung (23) zum Befüllen des Behälters (21) verbunden ist.

13. Härtungsvorrichtung für die Durchführung des Vernetzungs- und Expansionsverfahrens nach einem der Ansprüche 7 bis 9 des Typs, der einen Behälter (1) umfasst, der mit mindestens einer Öffnung (2) zum Zuführen und Entnehmen des oder jedes Rohlings (5a, 5c), einer Einrichtung (25) zum Aufnehmen des oder jedes Rohlings (5a, 5c), einer Einrichtung (13) zum Befüllen des Behälters (1) mit einem flüssigen oder gasförmigen Fluid, und einer Einrichtung (16) zum Erhitzen des Fluids und Ausüben von Druck auf das Fluid, das im Inneren des Behälters (1) enthalten ist, ausgestattet ist, **dadurch gekennzeichnet, dass**
- die Einrichtung (13) zum Befüllen des Behälters (1) aus einer Leitung besteht, die in eine Öffnung (14) des Behälters (1) mündet, wobei die Leitung (13) mit einer Einrichtung (15) ausgestattet ist, die dicht über die Innenseite der Wandung der Leitung gleitet, um das Fluid, das im Inneren des Behälters (1) enthalten ist, unter Druck zu setzen, wobei diese Leitung (13) außerdem daran angepasst ist, die Entleerung des Behälters (1) zu ermöglichen, und
- die Einrichtung zum Erhitzen (16) des Fluids auf der Außenseite des Behälters (1) und der Leitung (13) montiert ist.

14. Sicherheitsauflage (5c) für Luftreifen oder Teilstück dieser Auflage (5c), die/das durch ein Verfahren nach einem der Ansprüche 7 bis 9 erhältlich ist, wobei die Auflage oder das Teilstück (5c) aus einer vernetzten und expandierten Kauschukzusammensetzung besteht, die eine geschlossenzellige Struktur aufweist, wobei die Auflage (5c) dafür vorgesehen ist, auf einer Radfelge im Inneren eines Luftreifens montiert zu werden, **dadurch gekennzeichnet, dass** sie/es in radialer Richtung nach innen, ausgehend von ihrer/ seiner äußeren Oberfläche, eine Zwischenschicht (B) aufweist, deren Dicke im Bereich von 5 bis 30 % der kleinsten Ausdehnung eines Querschnitts des Teilstücks (5c) liegt und deren Dichte kleiner als die Dichte des Kerns (C) des Teilstücks (5c) ist.

15. Auflage oder Teilstück dieser Auflage (5c) nach Anspruch 14, **dadurch gekennzeichnet, dass** sie/es eine maximale Dichte in einer Oberflächenschicht (A) im Bereich ihrer/seiner äußeren Oberfläche, in radialer Richtung, auf der Außenseite der Zwischenschicht (B), aufweist.

16. Auflage oder Teilstück dieser Auflage (5c) nach Anspruch 14 oder 15, **dadurch gekennzeichnet, dass** sie/es eine mittlere Dichte aufweist, die im Bereich von 0,04 bis 0,4 liegt.

17. Auflage oder Teilstück dieser Auflage (5c) nach Anspruch 16, **dadurch gekennzeichnet, dass** sie/es eine mittlere Dichte von etwa 0,13 aufweist.

18. Auflage oder Teilstück dieser Auflage (5c) nach einem der Ansprüche 14 bis 17, **dadurch gekennzeichnet, dass** die jeweiligen Durchmesser der Zellen auf einem Querschnitt der Auflage oder des Teilstücks (5c) durchschnittlich von 0,1 bis 2 mm variieren.

19. Auflage oder Teilstück dieser Auflage (5c) nach einem der Ansprüche 14 bis 18, **dadurch gekennzeichnet, dass** sie/es darin besteht, ein oder mehrere Rohlinge (5a) zu verwenden, die allesamt Rohlinge auf der Basis eines Isopren-Isobutylen-Copolymers sind.

20. Auflage oder Teilstück dieser Auflage (5c) nach einem der Ansprüche 14 bis 19, **dadurch gekennzeichnet, dass** sie/es als verstärkenden Füllstoff einen Verschnitt von 10 bis 30 pce Kieselsäure und 10 bis 30 pce Ruß (pce: Gewichtsteile pro 100 Teile Elastomer(e)) enthält.

21. Auflage oder Teilstück dieser Auflage (5c) nach einem der Ansprüche 14 bis 20, die/das eine Basis (30, 40), die dafür vorgesehen ist, auf der Radfelge montiert zu werden, und einen Scheitel (31, 41) aufweist, der dafür vorgesehen ist, nach einem Druckabfall im Inneren eines Luftreifens gegen den Laufstreifen des Luftreifens gedrückt zu werden, **dadurch gekennzeichnet, dass** sie/es mindestens eine in Längsrichtung angeordnete Nut (32) aufweist, die sich auf dem Scheitel (31) in etwa geradlinig zu diesem, in der Längsrichtung der Auflage oder des Teilstücks dieser Auflage (5c) erstreckt.

22. Auflage oder Teilstück dieser Auflage (5c) nach einem der Ansprüche 14 bis 20, **dadurch gekennzeichnet, dass** sie/es mindestens einen in Längsrichtung verlaufenden Hohlraum (42) in ihrer/ seiner Masse aufweist, die sich in Längsrichtung der Auflage oder des Teilstücks der Auflage (5c) erstreckt.

23. Auflage (5c) nach einem der Ansprüche 14 bis 22, **dadurch gekennzeichnet, dass** sie im wesentlichen die Form eines Ringes hat.

24. Teilstück einer Auflage (5c) nach einem der Ansprüche 14 bis 22, **dadurch gekennzeichnet, dass** es ungefähr die Form eines Teiles eines Ringes hat.

25. Teilstück einer Auflage (5c) nach einem der Ansprüche 14 bis 22, **dadurch gekennzeichnet, dass** es ungefähr eine lineare Form hat.

## Claims

1. A process for expanding at least one partially cross-linked blank (5b) which is intended to form, in the cross-linked, expanded state, all or part of an elastomeric safety support (5c) of cellular structure having closed cells, said support (5c) being intended to be mounted on a wheel rim within a tyre,
**characterised in that** it consists of curing said or each blank (5b) in a bath (6) of fluid at excess pressure which is contained in an enclosure (1, 21), the temperature of said bath (6) having a maximum value of between 110°C and 210°C, and the absolute pressure of said bath (6) having at least a value equal to or greater than 5 bars and a final pressure-relief value substantially equal to 1 bar, for expanding said or each blank (5b) such that the increase in volume thereof is unlimited with respect to said enclosure (1,21).

2. An expansion process according to Claim 1, **characterised in that** it consists in varying, discretely or continuously, said absolute pressure of said fluid between a maximum value less than or equal to 26 bars and a value less than said maximum value.

3. An expansion process according to Claim 1 or 2, **characterised in that** it consists in using a liquid fluid for curing said or each blank (5b).

4. An expansion process according to Claim 1 or 2, **characterised in that** it consists in using a gaseous fluid for curing said or each blank (5b).

5. An expansion process according to one of the preceding claims, **characterised in that** it consists of cooling said bath (6) to a temperature less than or equal to 100°C and at an absolute pressure of between 1 and 26 bar, following the curing of said or each blank (5b).

6. An expansion process according to one of the preceding claims, **characterised in that** it consists of curing in said bath (6) a plurality of blanks (5b) of linear and/or curved forms.

7. A process for cross-linking and expanding at least one cross-linkable, expandable blank (5a) which is intended to form, in the cross-linked, expanded state, all or part of an elastomeric safety support (5c) of cellular structure having closed cells, said support (5c) being intended to be mounted on a wheel rim within a tyre, **characterised in that**:
- said cross-linking consists of curing said or each expandable or expanded blank (5a) in a bath (6) of fluid at excess pressure which is contained in an enclosure (1, 21), such that said or each blank (5a) interacts with said bath (6) independently of said enclosure (1, 21), the temperature of said bath (6) having a maximum value of between 110°C and 210°C, and the absolute pressure of said bath (6) having at least a value equal to or greater than 14 bars, and **in that**
- said expansion consists of subjecting said or each cross-linkable or cross-linked blank (5a, 5b) to an expansion process according to one of Claims 1 to 6.

8. A cross-linking and expansion process according to Claim 7, **characterised in that** it consists:
- in a first step, of subjecting said or each cross-linkable, expandable blank (5a) to said cross-linking in order to obtain a practically cross-linked, expandable blank (5b), then
- in a second step, of subjecting said or each blank (5b) which is practically cross-linked and expandable which is obtained following said first stage to said expansion, in order to obtain all or part of said corresponding cross-linked, expanded safety support (5c).

9. A cross-linking and expansion process according to Claim 7, **characterised in that** it consists:
- in a first step, of subjecting said or each cross-linkable, expandable blank (5a) to said expansion in order to obtain a cross-linkable, practically expanded blank, then
- in a second step, of subjecting said or each blank which is cross-linkable and practically expanded to said cross-linking, in order to obtain all or part of said corresponding cross-linked, expanded safety support (5c).

10. A curing device for implementing the cross-linking and expansion process according to one of Claims 7 to 9, of the type comprising an enclosure (1) which is provided with at least one opening (2, 3) for the introduction and extraction of said or each blank (5a, 5c), means (25) for receiving said or each blank (5a), means (23) for filling said enclosure (1) with liquid or gaseous fluid, and heating (16) and pressurisation (15) means for the fluid contained within said enclosure (1),
**characterised in that** said enclosure (1) comprises:
- an introduction compartment (7) provided at its inlet with an opening (2) for introducing into said compartment (7) a unit (4) of cross-linkable, expandable blanks (5a) for the curing thereof, said introduction opening (2) being provided with a means (2a) for shutting it off,
- a curing compartment (8) provided downstream of said introduction compartment (7) and provided at its inlet with a first mobile partition (9) for allowing it to communicate with said introduction compartment (7), said curing compartment (8) being intended to contain said heated, pressurised fluid in order to obtain a unit (4) of cross-linked, expandable blanks (5b), and
- an extraction compartment (10) provided downstream of said curing compartment (8) and provided at its inlet with a second mobile partition (11) for allowing it to communicate with said curing compartment (8) and at its outlet with an opening (3) to atmospheric pressure for extracting a unit (4) of cross-linked, expanded blanks (5c) from said enclosure (1), said extraction opening (3) being provided with a means (3a) for shutting it off,
- means (12) for alternately transferring said fluid at excess pressure from said extraction compartment (10) towards said introduction compartment (7), and from said introduction compartment (7) towards said extraction compartment (10).

11. A curing device for implementing the cross-linking and expansion process according to one of Claims 7 to 9, of the type comprising an enclosure (21) which is provided with means for the introduction and extraction of said or each blank (5a, 5c), a means (25) for receiving said or each blank (5a, 5c), means (23) for filling said enclosure (21) with liquid or gaseous fluid, and heating and pressurisation means for the fluid contained within said enclosure (21),
**characterised in that** said enclosure (21) is provided with a plurality of receiving means (25) mounted adjacent to each other on a conduit (23) intended for filling said enclosure (21) with fluid and extending into the interior thereof.

12. A curing device according to Claim 11, **characterised in that** said enclosure (21) comprises an outlet conduit connected to means for circulating said fluid towards said means (23) for filling the enclosure (21).

13. A curing device for implementing the cross-linking and expansion process according to one of Claims 7 to 9, of the type comprising an enclosure (1) which is provided with at least one opening (2) for the introduction and extraction of said or each blank (5a, 5c), means for receiving said or each blank (5a, 5c), means (13) for filling said enclosure (1) with liquid or gaseous fluid, and heating (16) and pressurisation means for the fluid contained within said enclosure (1), **characterised in that**
- said means (13) for filling the enclosure (1) are formed of a conduit opening into an opening (14) in said enclosure (1), said conduit (13) being provided with a means (15) which slides hermetically on the inner face of its wall for pressurising the fluid contained within said enclosure (1), this conduit (13) also being suitable for permitting emptying of said enclosure (1), and
- **in that** said means (16) for heating said fluid are mounted around said enclosure (1) and said conduit (13).

14. A safety support (5c) for a tyre or section of said support (5c) obtained by a process according to one of Claims 7 to 9, said support or said section (5c) being formed of a cross-linked, expanded rubber composition having a cellular structure having closed cells, said support (5c) being intended to be mounted on a wheel rim within a tyre, **characterised in that** it comprises, radially towards the inside of its outer surface, an intermediate layer (B), the thickness of which is between 5% and 30% of the smallest dimension of a cross-section through said section (5c), and the density of which is less than that of the core (C) of said section (5c).

15. A support or section of said support (5c) according to Claim 14, **characterised in that** it has a maximum density in a surface layer (A) at the location of its outer surface, radially to the outside of said intermediate layer (B).

16. A support or section of said support (5c) according to Claim 14 or 15, **characterised in that** it has an average density of between 0.04 and 0.4.

17. A support or section of said support (5c) according to Claim 16, **characterised in that** it has an average density substantially equal to 0.13.

18. A support or section of said support (5c) according to one of Claims 14 to 17, **characterised in that** the respective diameters of said cells vary on average from 0.1 mm to 2 mm, over a cross-section of said support or section (5c).

19. A support or section of said support (5c) according to one of Claims 14 to 18, **characterised in that** it consists of using one or more blanks (5a) each of which are based on a copolymer of isoprene and isobutylene.

20. A support or section of said support (5c) according to one of Claims 14 to 19, **characterised in that** it comprises, as reinforcing filler, a blend of 10 to 30 phr silica and 10 to 30 phr carbon black (phr: parts by weight per hundred parts of elastomer(s)).

21. A support or section of said support (5c) according to one of Claims 14 to 20, comprising a base (30, 40) intended to be mounted on said wheel rim and a crown (31, 41) intended to bear on the tread of said tyre following a drop in pressure within the latter, **characterised in that** it has at least one longitudinal groove (32) extending over said crown (31) substantially level with the latter, in the direction of the length of said support or section of support (5c).

22. A support or section of said support (5c) according to one of Claims 14 to 20, **characterised in that** it has at least one longitudinal cutout (42) in its mass, which extends in the direction of the length of said support or section of support (5c).

23. A support (5c) according to one of Claims 14 to 22, **characterised in that** it is substantially in the form of a torus.

24. A section of a support (5c) according to one of Claims 14 to 22, **characterised in that** it is substantially in the form of a portion of a torus.

25. A section of a support (5c) according to one of Claims 14 to 22, **characterised in that** it is substantially of linear form.
